# EUROPÄISCHE PATENTANMELDUNG

(11) **EP 4 484 768 A1**
(43) Veröffentlichungstag der Anmeldung: **01.01.2025**
(21) Anmeldenummer: 24183921.6
(22) Anmeldetag: 24.06.2024
(51) Int. Cl.: F16B 12/40

(54) **SPANNVERBINDER ZUR LÖSBAREN, VORZUGSWEISE STUMPFEN, VERBINDUNG EINES STIRNENDES EINES ERSTEN HOHLPROFILS EINES MÖBELGESTELLS MIT EINEM ZWEITEN HOHLPROFIL DES MÖBELGESTELLS SOWIE, VORZUGSWEISE STUMPFE, VERBINDUNG MITTELS DESSELBEN**

(30) Priorität: 28.06.2023 DE 202023103577 U
(71) Anmelder: Oelschläger Metalltechnik GmbH, 27318 Hoya (DE)
(72) Erfinder: Meyer, Bennet, 31595 Steyerberg (DE)
(74) Vertreter: Manasse, Uwe

(57) **Zusammenfassung**

Spannverbinder zur lösbaren, vorzugsweise stumpfen, Verbindung eines Stirnendes eines ersten Hohlprofils eines Möbelgestells mit einem zweiten Hohlprofil des Möbelgestells, umfassend: einen in das Stirnendes des ersten Hohlprofils einsetzbaren Spannkorpus mit einer Durchgangsbohrung, die in Längsrichtung des ersten Hohlprofils verläuft, wenn der Spannkorpus in das Stirnende des ersten Hohlprofils eingesetzt ist, einen Nutenstein mit einer Gewindebohrung, eine erste Schraube in der Durchgangsbohrung in dem Spannkorpus zum Befestigen des Nutensteins an dem Spannkorpus und zum kraft- und formschlüssigen Befestigen des Spannkorpus an dem zweiten Hohlprofil, wenn ein Teil, insbesondere ein plattenförmiger Teil, des Nutensteins in eine entsprechende Kontur in dem zweiten Hohlprofil eingesetzt ist, wobei der Spannkorpus zusätzlich eine Gewindebohrung quer zu seiner Durchgangsbohrung zu seiner kraftschlüssigen Befestigung im Inneren des Stirnendes des ersten Hohlprofils mittels einer zweiten Schraube, die sich von außen durch eine Bohrung in der Wand des ersten Hohlprofils erstreckt, umfasst.

## Beschreibung

Die vorliegende Erfindung betrifft einen Spannverbinder zur lösbaren, vorzugsweise stumpfen, Verbindung eines Stirnendes eines ersten Hohlprofils eines Möbelgestells mit einem zweiten Hohlprofil des Möbelgestells sowie eine, vorzugsweise stumpfe, Verbindung zwischen einem Stirnende eines ersten Hohlprofils eines Möbelgestells und einem zweiten Hohlprofil des Möbelgestells mittels des Spannverbinders.

Möbelgestelle, wie beispielsweise Tischgestelle und Regalgestelle, bestehen häufig aus fixen Grundelementen, die durch Einsetzen verschiedener Traversen diverse Möglichkeiten in Form und Varianz abbilden. Die Traversen lassen sich häufig nur mittels unterschiedlicher Verbindungskomponenten mit den Grundelementen verbinden. Das macht die Montage verschiedenster Möbelsysteme recht umständlich.

Der vorliegenden Erfindung liegt somit die Aufgabe zugrunde, eine einheitliche Montage verschiedenster Möbelsysteme zu ermöglichen.

Erfindungsgemäß wird diese Aufgabe gelöst durch einen Spannverbinder zur lösbaren, vorzugsweise stumpfen, Verbindung eines Stirnendes eines ersten Hohlprofils eines Möbelgestells mit einem zweiten Hohlprofil des Möbelgestells, umfassend:
einen in das Stirnendes des ersten Hohlprofils einsetzbaren Spannkorpus mit einer Durchgangsbohrung, die in Längsrichtung des ersten Hohlprofils verläuft, wenn der Spannkorpus in das Stirnende des ersten Hohlprofils eingesetzt ist,
einen Nutenstein mit einer Gewindebohrung,
eine erste Schraube in der Durchgangsbohrung in dem Spannkorpus zum Befestigen des Nutensteins an dem Spannkorpus und zum kraftschlüssigen Befestigen des Spannkorpus an dem zweiten Hohlprofil, wenn ein Teil, insbesondere ein plattenförmiger Teil, des Nutensteins in eine entsprechende Kontur in dem zweiten Hohlprofil eingesetzt ist,
wobei der Spannkorpus zusätzlich eine Gewindebohrung quer zu seiner Durchgangsbohrung zu seiner kraftschlüssigen Befestigung im Inneren des Stirnendes des ersten Hohlprofils mittels einer zweiten Schraube, die sich von außen durch eine Bohrung in der Wand des ersten Hohlprofils erstreckt, umfasst.

Vorzugsweise weist der Spannkorpus (zusätzliche) Längsrippen zur Positionierung und Zentrierung im Inneren des Stirnendes des ersten Hohlprofils auf.

Weiterhin wird diese Aufgabe gelöst durch eine, vorzugsweise stumpfe, Verbindung zwischen einem Stirnende eines ersten Hohlprofils eines Möbelgestells und einem zweiten Hohlprofil des Möbelgestells mittels des Spannverbinders nach Anspruch 1, wobei der Nutenstein des Spannverbinders mittels der sich in der Durchgangsbohrung des Spannverbinders erstreckenden ersten Schraube des Spannverbinders am Spannkorpus des Spannverbinders befestigt ist, der Spannverbinder in das Stirnende des ersten Hohlprofils so eingesetzt ist, dass der Nutenstein über das Stirnende des ersten Hohlprofils vorsteht, und ein Teil, insbesondere ein plattenförmiger Teil, des Nutensteins in eine Kontur in der Wand des zweiten Hohlprofils eingesetzt ist, und der Spannkorpus mittels des Nutensteins und der ersten Schraube an dem zweiten Hohlprofil kraftschlüssig befestigt ist und mittels eines zweiten Schraube, die sich von außen durch eine Bohrung in der Wand des erste Hohlprofils quer zur Durchgangsbohrung im Spannverbinder erstreckt und in die Gewindebohrung im Spannkorpus geschraubt ist, im Inneren des Stirnendes des ersten Hohlprofils kraftschlüssig befestigt ist.

Vorteilhafterweise ist der Spannverbinder in das Stirnende des ersten Hohlprofils in eine spezielle Kontur eingesetzt. Die spezielle Kontur ist vorzugsweise vierseitig. Die Hohlprofile können dabei z. B. rechtwinklig aufeinanderstoßen und z. B. T-förmig aufeinandertreffen.

Bei dem Spannverbinder kann vorgesehen sein, dass die erste Schraube eine Zylinderkopfschraube ist.

Vorzugsweise ist der Nutenstein ein T-Nutenstein mit einem plattenförmigen Teil und einem stabförmigen, insbesondere konusförmigen, Teil.

In einer besonderen Ausführungsform der Verbindung weist das Stirnende des ersten Hohlprofils mindestens eine in Längsrichtung vorstehende Nase und das zweite Hohlprofil eine korrespondierende Kontur zur formschlüssigen Positionierung des Stirnendes des ersten Hohlprofils an dem zweiten Hohlprofil auf.

Weiterhin kann vorgesehen sein, dass das erste Hohlprofil horizontal verläuft und/oder das zweite Hohlprofil vertikal verläuft.

Zweckmäßigerweise ist/sind das erste Hohlprofil und/oder das zweite Hohlprofil ein Vierkantprofil.

In einer weiteren besonderen Ausführungsform ist/sind das erste Hohlprofil und/oder das zweite Hohlprofil ein Rundprofil.

Vorteilhafterweise ist die erste Schraube eine Zylinderkopfschraube.

Ferner kann vorgesehen sein, dass die zweite Schraube eine Senkkopfschraube ist.

Insbesondere kann dabei vorgesehen sein, dass die Längsachse der Bohrung in der Wand des ersten Hohlprofils und die Längsachse der Gewindebohrung im Spannkorpus mit einem Versatz zueinander in Richtung zum zweiten Hohlprofil gefertigt sind derart, dass der Senkkopf der Senkkopfschraube im Einbauzustand eine Kraft auf die Wandung der Bohrung im ersten Hohlprofil in Richtung zum zweiten Hohlprofil ausübt.

Außerdem kann das Möbelgestell ein Tischgestell sein.

Insbesondere kann das erste Hohlprofil eine Traverse und das zweite Hohlprofil ein Seitenteil sein.

Alternativ kann das Möbelgestell ein(e) starre(s) oder mobile(s) Einheit/Gestell, wie z.B. ein Regalgestell oder ein Whiteboardwagen, sein.

Der Spannverbinder bzw. die Verbindung kann auch zur Verkettung von Möbelgestellkomponenten verwendet werden. Insbesondere ist damit eine flexible Verkettung von unterschiedlichen Möbelgestellen und somit eine Erweiterung möglich.

Der Erfindung liegt die überraschende Erkenntnis zugrunde, dass der Spannverbinder eine universelle Verbindung und einfache Montage ermöglicht. Insbesondere ist ein segmentweiser Aufbau von z. B. Regalen, Möbeln und Tischen möglich. Eine Auslieferung kann je nach Form und Ausführung zerlegt oder vormontiert erfolgen. Es ist auch eine Verkettung von Komponenten möglich.

Zumindest in besonderen Ausführungsformen:
- werden gleiche Rohrprofile eingesetzt, und/oder
- werden Normschrauben verwendet, und/oder
- wird ein einzelner Nutenstein verwendet, der mit einer Schraube an einen Spannkörper herangezogen wird, und/oder
- wird zusätzlich eine konische Form eines Nutensteins zur formschlüssigen Fixierung in einem Rohrprofil genutzt, und/oder
- werden am Spannkörper auf jeder Seite zwei Auflagebacken zur Zentrierung genutzt, die vorzugsweise als leichte Übergangspassung ausgelegt sind, und/oder
- können 360°-Anbindungen abgebildet werden, und/oder
- wird eine Schlüsselochkontur im Rohrprofil genutzt, die ein Verrutschen des Nutensteins zusätzlich vermeidet, und/oder
- werden zusätzlich Konturen und Nasen zur weiteren Verstärkung verwendet.

Weitere Merkmale und Vorteile der Erfindung ergeben sich aus den beigefügten Ansprüchen und aus der nachfolgenden ausführlichen Beschreibung von bevorzugten Ausführungsbeispielen anhand der schematischen Zeichnungen. Dabei zeigt/zeigen:
Figur 1a: eine Explosionsansicht von einem Spannverbinder gemäß einer besonderen Ausführungsform der vorliegenden Erfindung;
Figuren 1b bis 1g: diverse Ansichten des Spannverbinders (10) von Figur 1 im zusammengebauten Zustand;
Figur 2: eine Explosionsansicht einer Verbindung gemäß einer besonderen Ausführungsform der vorliegenden Erfindung;
Figur 3a: eine Seitenansicht von einem ersten Hohlprofil einem zweiten Hohlprofil vor einer Verbindung derselben;
Figur 3b: eine Schnittansicht A-A von Figur 3a;
Figur 3c: eine Detailansicht Z von Figur 3b;
Figur 3d: die Detailansicht von Figur 3c nach Befestigung des ersten Hohlprofils; und
Figur 4: eine Explosionsansicht von beidseitigen Verbindungen gemäß einer weiteren besonderen Ausführungsform der vorliegenden Erfindung.
Figur 5a bis 5c: Einzelheiten des Festziehens eines T-förmigen Nutensteins;
Figur 6: eine Seitenansicht von einem T-förmigen Nutenstein gemäß einer besonderen Ausführungsform der vorliegenden Erfindung; und
Figuren 7a bis 7c: perspektivische Ansichten von einer vierseitigen Anbindung eines Spannverbinders an einem Hohlprofil in Form eines beispielhaften Vierkantprofils gemäß einer besonderen Ausführungsform der vorliegenden Erfindung.

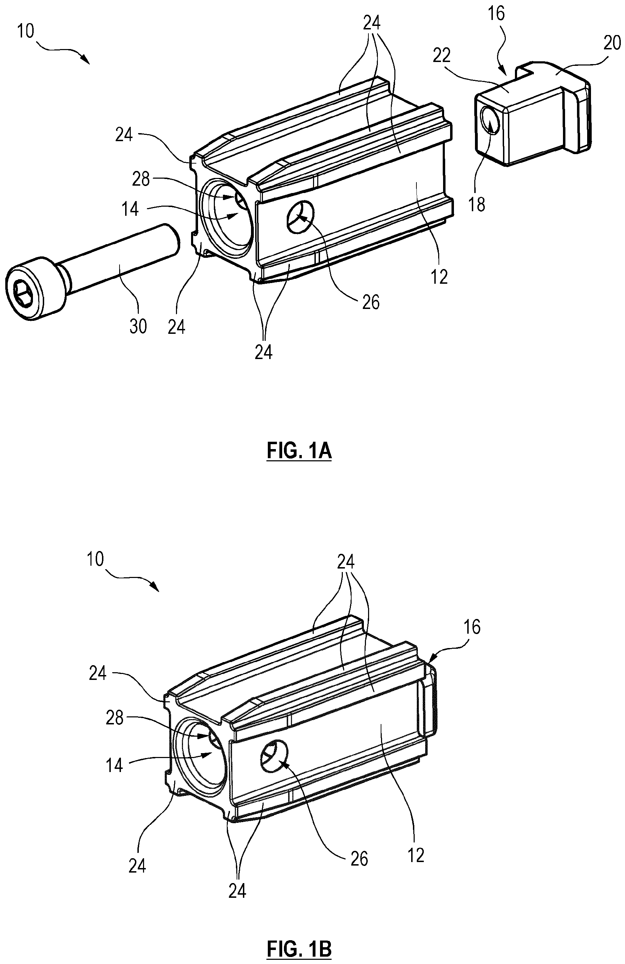

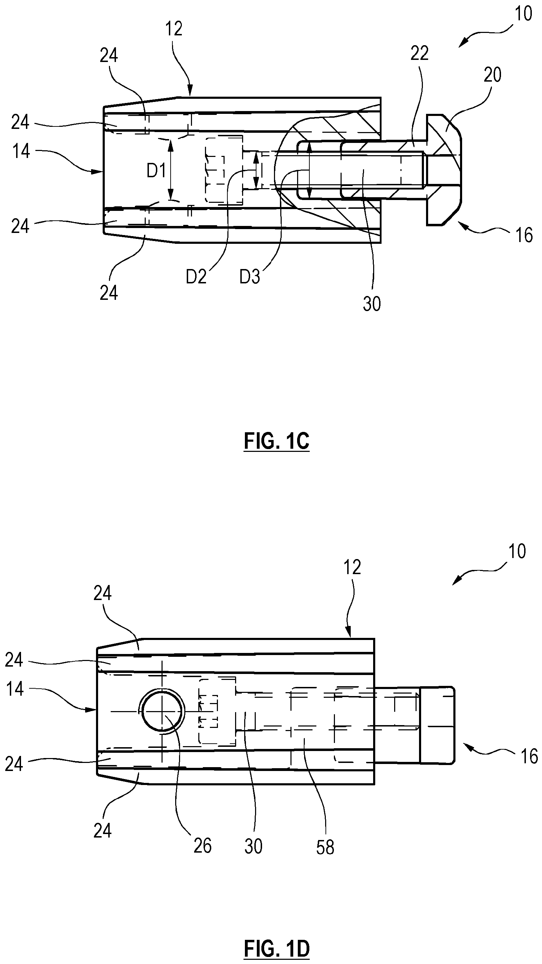

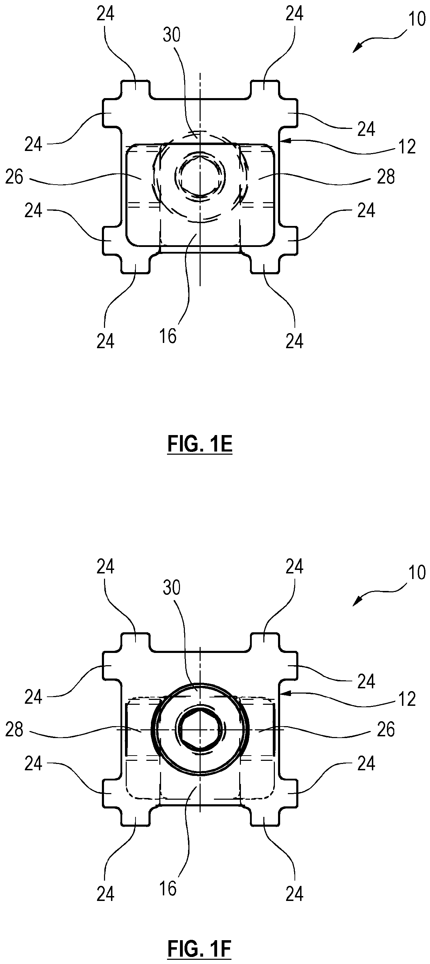

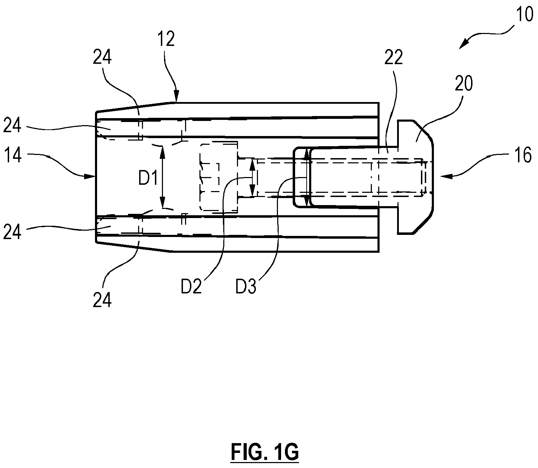

Der in den Figuren 1a bis 1g gezeigte Spannverbinder 10 zur lösbaren, vorzugsweise stumpfen, Verbindung eines Stirnendes eines ersten Hohlprofils eines Möbelgestells mit einem zweiten Hohlprofil des Möbelgestells umfasst in diesem Beispiel einen in ein Stirnende eines ersten Hohlprofils einsetzbaren Spannkorpus 12 mit einer Durchgangsbohrung 14 in seiner Längsrichtung und einen T-förmigen Nutenstein (T-Nutenstein) 16 mit einer Gewindebohrung 18 in seiner Längsrichtung. Der Nutenstein weist einen plattenförmigen Teil 20 und einen stabförmigen Teil 22 auf. In diesem Beispiel erstreckt sich die Gewindebohrung 18 in Längsrichtung des Nutensteins 16 durch den plattenförmigen Teil 20 und den stabförmigen Teil 22.

Der Spannkörper 12 weist einen im Wesentlichen viereckigen, insbesondere quadratischen, Querschnitt mit Längsrippen 24 in seinen Eckbereichen auf. In diesem Beispiel sind zwei Längsrippen 24 pro Seite vorgesehen. Die Längsrippen 24 dienen in diesem Beispiel als Auflagebacken. Die Durchgangsbohrung 14 weist in diesem Beispiel, ausgehend vom in der Figur 1a linken Ende des Spannkorpus 12 - einen ersten Abschnitt A1 mit einem gemittelten ersten Durchmesser d₁, einen zweiten Abschnitt A2 mit einem zweiten Durchmesser d₂ und einen dritten Abschnitt A3 mit einem dritten Durchmesser d₃ auf, wobei in diesem Beispiel gilt d₁ > d₃ > d₂.

Ferner weist der Spannkorpus im Bereich seines ersten Abschnitts A1 gegenüberliegende Gewindebohrungen 26 und 28 auf, die sich quer zur Längserstreckung der Durchgangsbohrung 14 durch die Wand des Spannkorpus 12 erstrecken.

Des Weiteren umfasst der Spannverbinder 12 eine (erste) Schraube 30, in diesem Beispiel eine Zylinderkopfschraube, zum Befestigen des Nutensteins 16 an dem Spannkorpus 10. Dazu sind die Durchmesser d₂ und d₃ der Durchgangsbohrung 14 so gewählt, dass ein Schaft der (ersten) Schraube 30 hindurchtreten kann, während der erste Durchmesser d₁ der Durchgangsbohrung 14 so gewählt ist, dass im ersten Abschnitt A1 der Durchgangsbohrung 14 der Kopf der (ersten) Schraube 30 Platz hat und an dem Absatz zum zweiten Abschnitt A2 mit dem zweiten Durchmesser d₂ aufliegen kann.

Die Längsrippen 24 des Spannkorpus 12 weisen auf der in der Figur 1a linken Seite jeweils eine Schräge zum besseren bzw. leichteren Einführen des Spannkörpers 12 in ein Stirnende eines Hohlprofils auf.

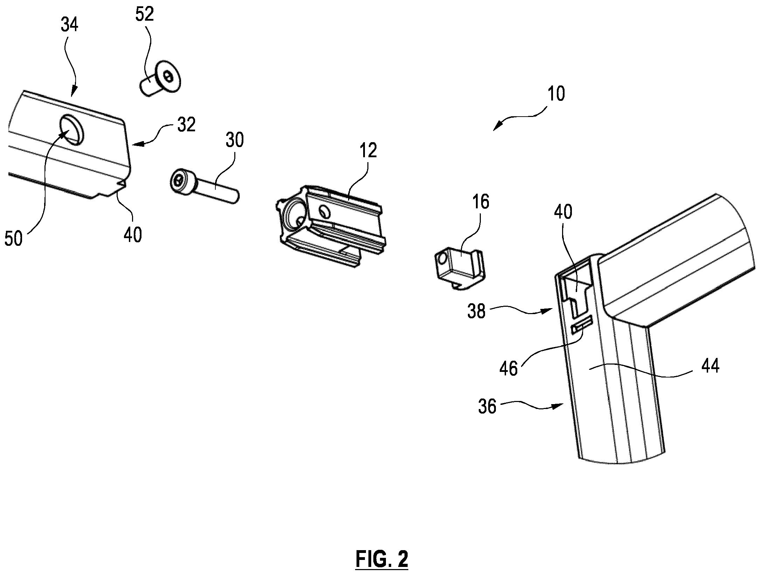

Figur 2 zeigt sowohl den Spannverbinder 10 von Figuren 1a bis 1g als auch weitere Details einer in diesem Beispiel stumpfen Verbindung zwischen einem Stirnende 32 eines ersten Hohlprofils 34, das in diesem Beispiel horizontal orientiert ist und zum Beispiel eine Rohrtraverse eines Tischgestells sein kann, eines Möbelgestells und einem zweiten Hohlprofil 36 des Möbelgestells, das in diesem Beispiel vertikal orientiert ist und zum Beispiel ein Seitenteil eines Tischgestells sein kann. Genauer gesagt dient die Verbindung in diesem Beispiel zur Herstellung einer Verbindung im rechten Winkel zwischen den ersten und zweiten Hohlprofilen 34 und 36 am Stirnende 32 des ersten Hohlprofils und im Seitenbereich des Längsendes 38 des zweiten Hohlprofils 36.

Sowohl das erste Hohlprofil 34 als auch das zweite Hohlprofil 36 sind in diesem Beispiel Vierkantprofile.

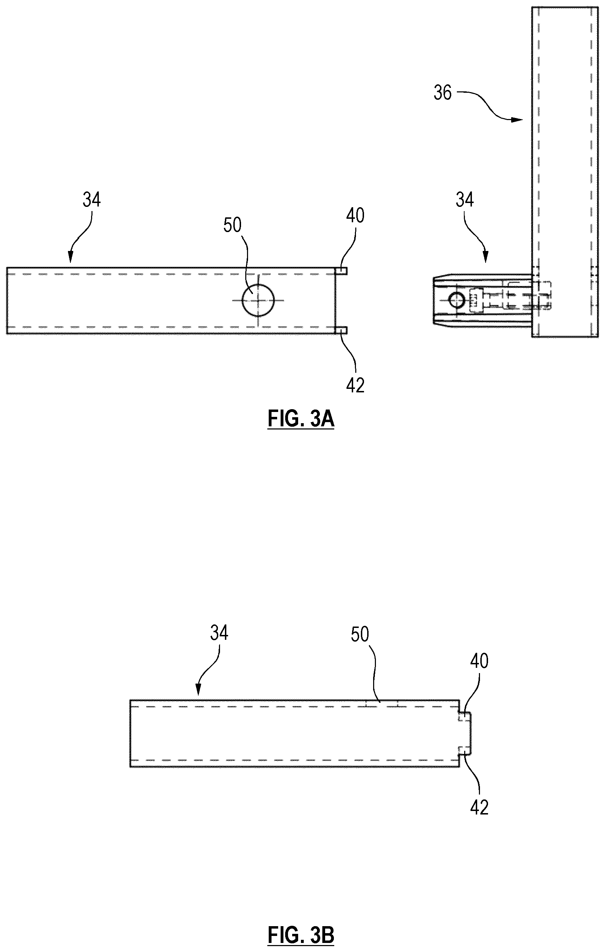

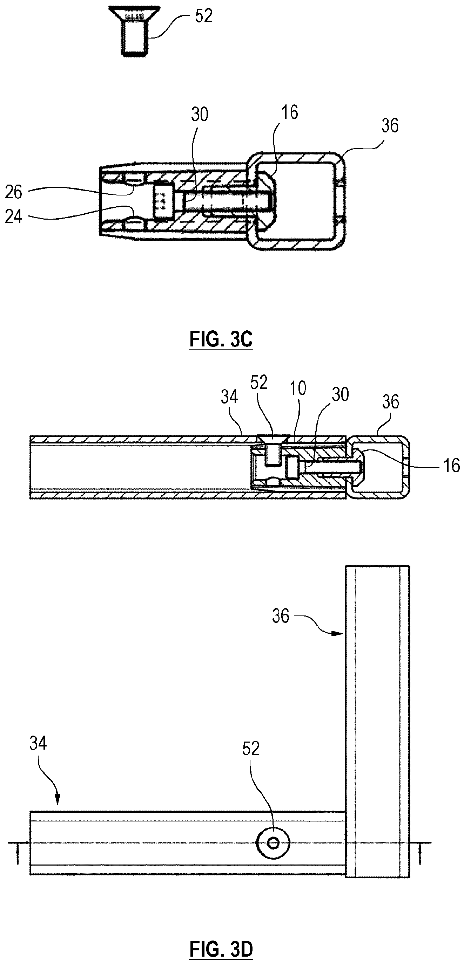

Das Stirnende 32 des ersten Hohlprofils 34 weist oben und unten jeweils eine in Längsrichtung vorstehende Nase 40 bzw. 42 (s. beispielhaft Figur 3a) und das zweite Hohlprofil 36 weist auf seiner Längsseite 44 korrespondierende Konturen 46 und 48 (Schlüssellochkontur) zur Vernasung auf, wobei die Kontur 48 auch zum Hindurchlassen des plattenförmigen Teils 20 des Nutensteins 16 im oberen Bereich und Klemmen lediglich des stabförmigen Teils 22 des Nutensteins 16 im unteren Bereich dient.

Vorzugsweise weisen die Nasen 40 und 42 unterschiedliche Breiten (s. beispielhaft Figur 3b) auf, um eine Verdrehung zu vermeiden. Die Nasen 42 und 40 greifen in die Konturen 38 bzw. 46 und dienen zur vertikalen Kraftaufnahme.

In diesem Beispiel ist die untere Nase 40 schmaler als die obere Nase 42.

Des Weiteren sind in der Figur 2 eine Bohrung 50 in der seitlichen Wand des ersten Hohlprofils 34 und eine (zweite) Schraube 52, in diesem Beispiel eine Senkkopfschraube, zum Hindurchführen durch die Bohrung 50 und Befestigen des Spannkorpus 12 mittels der zweiten Schraube 52 an dem ersten Hohlprofil 34, genauer gesagt dem Längsende desselben, gezeigt.

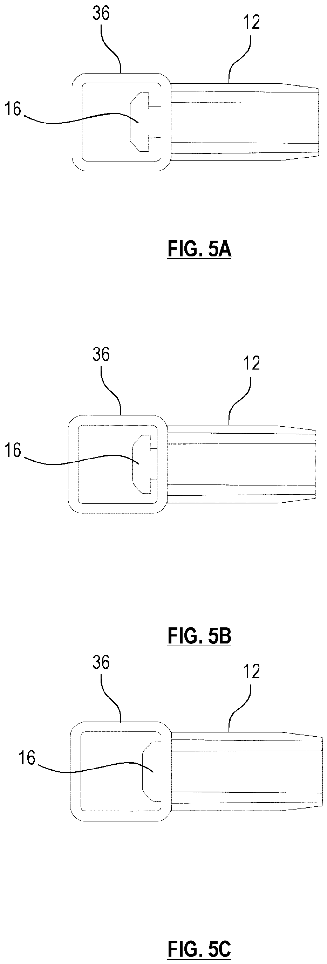

Die Figuren 3a bis 3c zeigen eine Phase der Herstellung der Verbindung zwischen den in der Figur 2 gezeigten ersten und zweiten Hohlprofilen 34 und 36. Wie sich daraus ergibt, werden zunächst der Spannkorpus 12 und der Nutenstein 16 mittels der (ersten) Schraube 30 miteinander verbunden und wird dann der Nutenstein 16 in die Kontur 48 "eingehängt" und durch Festziehen der (ersten) Schraube 30 in diesem Beispiel im rechten Winkel an dem zweiten Hohlprofil 36 kraft- und formschlüssig befestigt (s. beispielhaft Figuren 5a-5c).

Wie sich in Kombination mit der Figur 3d ergibt, wird dann das erste Hohlprofil 34 mit seinem Stirnende 32 über den Spannverbinder 10 geschoben und mittels der zweiten Schraube 52 wird das erste Hohlprofil an dem Spannverbinder 10 befestigt.

Der Spannkorpus 10 weist zum Einsetzen in das Stirnende 32 entsprechende Außenabmessungen auf, vorzugsweise so dass er zumindest nahezu formschlüssig in das Stirnende 32 passt, aber sich darin noch etwas verschieben lässt.

Da die Bohrung 50 in dem ersten Hohlprofil 32 nicht konzentrisch zur zweiten Schraube 52 ist, kollidiert die Phase der zweiten Schraube, hier Senkkopfschraube, 52 beim Einschrauben in den Spannverbinder 10 mit dem ersten Hohlprofil 34 und drückt dieses in Richtung zum zweiten Hohlprofil 36. Somit kommt es zu einer Vorspannung.

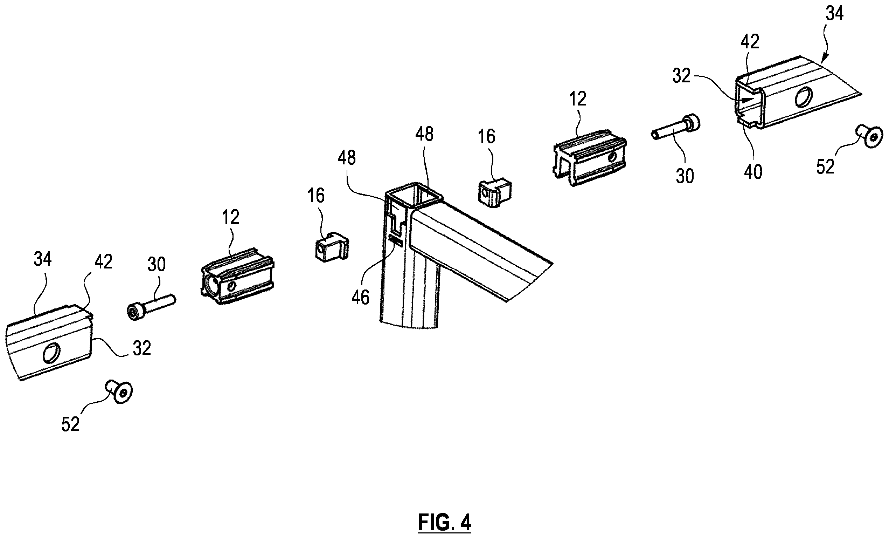

Figur 4 zeigt beispielhaft die Möglichkeit der beidseitigen Verbindung durch eine Spiegelung. Es ist also beidseitig jeweils ein Spannverbinder 10 zur Herstellung einer jeweiligen Verbindung vorgesehen. Hinsichtlich Einzelheiten wird auf die Beschreibung der Figur 2 verwiesen.

Die Figuren 5a bis 5c zeigen beispielhaft, wie ein T-förmiger Nutenstein 16, wenn er bereits beispielsweise in die in der Figur 2 gezeigte Kontur 46 eingesetzt worden ist, durch Anziehen einer Schraube, beispielsweise der in Figur 2 gezeigten Schraube 30, in Richtung zu einem Spannkörper, z. B. einem in der Figur 2 gezeigten Spannkörper 12, und damit in den Figuren 5a bis 5c fortschreitend nach rechts gegen die Innenseite eines Hohlprofils, beispielsweise des in der Figur 2 gezeigten zweiten Hohlprofils 36, gezogen wird, so dass eine kraft- und formschlüssige Verbindung entsteht.

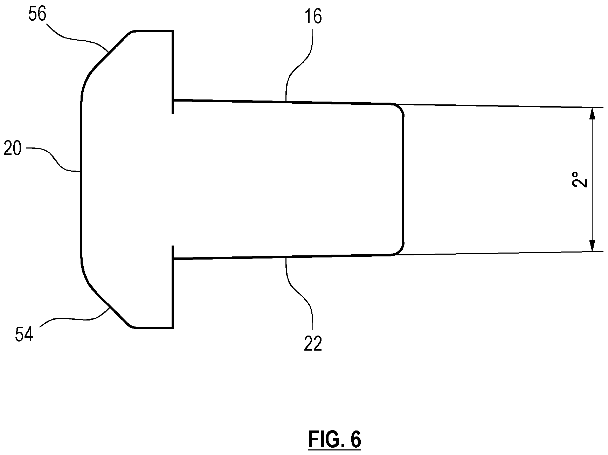

Die Figur 6 zeigt eine Seitenansicht von einem T-förmigen Nutenstein 16 gemäß einer besonderen Ausführungsform der vorliegenden Erfindung. Der Nutenstein 16 weist einen im Wesentlichen plattenförmigen Teil 20 und einen im Wesentlichen stabförmigen Teil 22 auf. Der plattenförmige Teil 20 weist seitliche Fasen 54 und 56 auf. Der stabförmige Teil 22 kann z. B. einen quadratischen, runden oder ovalen Querschnitt aufweisen. Im vorliegenden Beispiel weist der stabförmige Teil einen rechteckigen bzw. quadratischen Querschnitt auf. Dieser verjüngt sich jedoch etwas zu seinem Ende hin, so dass der stabförmige Teil 22 konusförmig ist. Im vorliegenden Beispiel beträgt der Konuswinkel in der Figur 6 oben und unten jeweils 1°. Wenn dann die Aufnahmeöffnung, beispielsweise die in der Figur 1c gezeigte Aufnahmeöffnung 58, komplementär gestaltet ist, so lässt sich dadurch eine kraft- und formschlüssige Verbindung zwischen dem Nutenstein 16 und einem Spannkorpus, wie beispielsweise dem Spannkorpus 12 in der Figur 1c, erreichen.

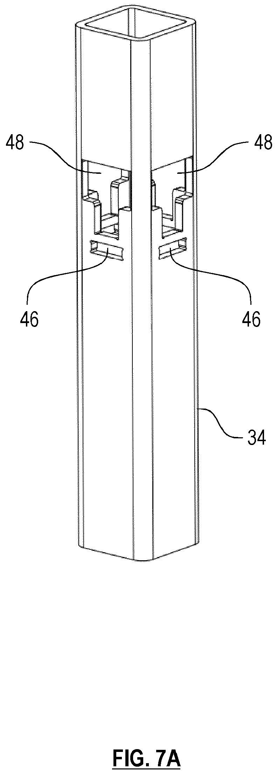

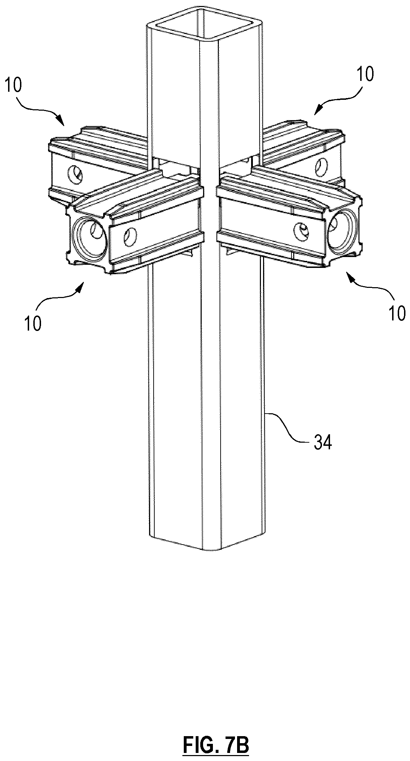

Die Figuren 7a bis 7c zeigen beispielhaft eine vierseitige Anbindung von Spannverbindern 10 an einem, in diesem Beispiel vertikalen, ersten Hohlprofil 34 mit Konturen 46 und 48 wie z. B. in der Figur 2. Die Figur 7a zeigt das Hohlprofil 34 alleine und die Figur 7b zeigt das Hohlprofil 34 mit vier unter rechten Winkeln zueinander angeordneten Spannverbindern 10.

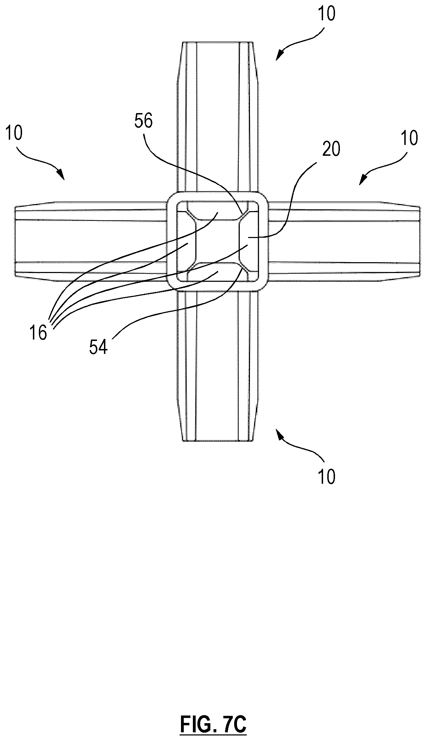

Die Figur 7c zeigt eine Draufsicht von oben. Hier ist deutlich zu erkennen, dass Fasen 54 und 56, wie beispielsweise in der Figur 6 gezeigt, von plattenförmigen Teilen 20 von Nutensteinen 16 eine platzsparende Anordnung der Nutensteine 16 und damit eine platzsparende Verbindung von in diesem Beispiel vier Spannverbindern 10 unter rechten Winkeln ermöglichen.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

### Bezugszeichenliste

- 10: Spannverbinder
- 12: Spannkorpus
- 14: Durchgangsbohrung
- 16: Nutenstein
- 18: Gewindebohrung
- 20: plattenförmiger Teil
- 22: stabförmiger Teil
- 24: Längsrippen
- 26, 28: Gewindebohrungen
- 30: erste Schraube
- 32: Stirnende
- 34: erstes Hohlprofil
- 36: zweites Hohlprofil
- 38: Längsende
- 40, 42: Nasen
- 44: Längsseite
- 46, 48: Konturen
- 50: Bohrung
- 52: zweite Schraube
- 54,56: Fasen
- 58: Aufnahmeöffnung
- A1: erster Abschnitt
- A2: zweiter Abschnitt
- A3: dritter Abschnitt
- d₁: erster Durchmesser
- d₂: zweiter Durchmesser
- d₃: dritter Durchmesser
- v: Versatz

## Patentansprüche

1. Spannverbinder (10) zur lösbaren, vorzugsweise stumpfen, Verbindung eines Stirnendes (32) eines ersten Hohlprofils eines Möbelgestells mit einem zweiten Hohlprofil des Möbelgestells, umfassend:
einen in das Stirnendes (32) des ersten Hohlprofils einsetzbaren Spannkorpus (12) mit einer Durchgangsbohrung (14), die in Längsrichtung des ersten Hohlprofils verläuft, wenn der Spannkorpus (12) in das Stirnende (32) des ersten Hohlprofils eingesetzt ist,
einen Nutenstein (16) mit einer Gewindebohrung (18),
eine erste Schraube (30) in der Durchgangsbohrung (14) in dem Spannkorpus (12) zum Befestigen des Nutensteins (16) an dem Spannkorpus (12) und zum kraft- und formschlüssigen Befestigen des Spannkorpus (12) an dem zweiten Hohlprofil, wenn ein Teil, insbesondere ein plattenförmiger Teil, des Nutensteins (16) in eine entsprechende Kontur in dem zweiten Hohlprofil eingesetzt ist,
wobei der Spannkorpus (12) zusätzlich eine Gewindebohrung (18) quer zu seiner Durchgangsbohrung (14) zu seiner kraftschlüssigen Befestigung im Inneren des Stirnendes (32) des ersten Hohlprofils mittels einer zweiten Schraube, die sich von außen durch eine Bohrung in der Wand des ersten Hohlprofils erstreckt, umfasst.

2. Spannverbinder (10) nach Anspruch 1, wobei die erste Schraube (30) eine Zylinderkopfschraube ist.

3. Spannverbinder (10) nach Anspruch 1 oder 2, wobei der Nutenstein (16) ein T-Nutenstein mit einem plattenförmigen Teil und einem stabförmigen, insbesondere konusförmigen, Teil ist.

4. Vorzugsweise stumpfe, Verbindung zwischen einem Stirnende (32) eines ersten Hohlprofils eines Möbelgestells und einem zweiten Hohlprofil des Möbelgestells mittels des Spannverbinders (10) nach einem der vorangehenden Ansprüche, wobei der Nutenstein (16) des Spannverbinders (10) mittels der sich in der Durchgangsbohrung (14) des Spannverbinders (10) erstreckenden ersten Schraube (30) des Spannverbinders (10) am Spannkorpus (12) des Spannverbinders (10) befestigt ist, der Spannverbinder (10) in das Stirnende (32) des ersten Hohlprofils so eingesetzt ist, dass der Nutenstein (16) über das Stirnende (32) des ersten Hohlprofils vorsteht, und ein Teil, insbesondere ein plattenförmiger Teil, des Nutensteins (16) in eine Kontur in der Wand des zweiten Hohlprofils eingesetzt ist, und der Spannkorpus (12) mittels des Nutensteins (16) und der ersten Schraube (30) an dem zweiten Hohlprofil kraftschlüssig befestigt ist und mittels eines zweiten Schraube (52), die sich von außen durch eine Bohrung (50) in der Wand des erste Hohlprofils quer zur Durchgangsbohrung (14) im Spannverbinder (10) erstreckt und in die Gewindebohrung (18) im Spannkorpus (12) geschraubt ist, im Inneren des Stirnendes (32) des ersten Hohlprofils kraftschlüssig befestigt ist.

5. Verbindung nach Anspruch 4, wobei das Stirnende (32) des ersten Hohlprofils mindestens eine in Längsrichtung vorstehende Nase und das zweite Hohlprofil eine korrespondierende Kontur zur formschlüssigen Positionierung des Stirnendes (32) des ersten Hohlprofils an dem zweiten Hohlprofil aufweist.

6. Verbindung nach Anspruch 4 oder 5, wobei das erste Hohlprofil horizontal verläuft und/oder das zweite Hohlprofil vertikal verläuft.

7. Verbindung nach einem der Ansprüche 4 bis 6, wobei das erste Hohlprofil und/oder das zweite Hohlprofil ein Vierkantprofil ist/sind.

8. Verbindung nach einem der Ansprüche 4 bis 6, wobei das erste Hohlprofil und/oder das zweite Hohlprofil ein Rundprofil ist/sind.

9. Verbindung nach einem der Ansprüche 4 bis 8, wobei die erste Schraube (30) eine Zylinderkopfschraube ist.

10. Verbindung nach einem der Ansprüche 4 bis 9, wobei die zweite Schraube (52) eine Senkkopfschraube ist.

11. Verbindung nach Anspruch 10, wobei die Längsachse der Bohrung (50) in der Wand des ersten Hohlprofils und die Längsachse der Gewindebohrung (18) im Spannkorpus (12) mit einem Versatz zueinander in Richtung zum zweiten Hohlprofil gefertigt sind derart, dass der Senkkopf der Senkkopfschraube im Einbauzustand eine Kraft auf die Wandung der Bohrung (50) im ersten Hohlprofil in Richtung zum zweiten Hohlprofil ausübt.

12. Verbindung nach einem der Ansprüche 4 bis 11, wobei das Möbelgestell ein Tischgestell ist.

13. Verbindung nach Anspruch 12, wobei das erste Hohlprofil eine Traverse und das zweite Hohlprofil ein Seitenteil ist.

14. Verbindung nach einem der Ansprüche 4 bis 11, wobei das Möbelgestell ein(e) starre(s) oder mobile(s) Einheit/Gestell, wie z.B. ein Regalgestell oder ein Whiteboardwagen, ist.
